# EUROPEAN PATENT APPLICATION

(11) **EP 4 481 702 A1**
(43) Date of publication of application: **25.12.2024**
(21) Application number: 23210623.7
(22) Date of filing: 17.11.2023
(51) Int. Cl.: G07C 5/08, B60R 25/30

(54) **DRIVE VIDEO RECORD SYSTEM AND METHOD OF CONTROLLING THE SAME**

(30) Priority: 19.06.2023 KR 20230078302
(71) Applicant: HYUNDAI MOTOR COMPANY, Seoul 06797 (KR); Kia Corporation, Seocho-gu Seoul 06797 (KR)
(72) Inventor: NOH, Seung Yeop, 16830 Yongin-si, Gyeonggi-do (KR)
(74) Representative: Viering, Jentschura & Partner mbB Patent- und Rechtsanwälte

(57) **Abstract**

A method of controlling a drive video record system includes providing a camera module for monitoring an area around a vehicle, a first memory for storing video transmitted from the camera module, and a controller including a second memory for storing a computer program for controlling storage of the video and a processor for executing the computer program, where through execution of the computer program, the processor acquires password information of a user, acquires video or audio according to a set condition, and encrypts and stores the video or audio based on the password information.

## Description

### BACKGROUND

### (a) Technical Field

The present disclosure relates to a drive video record system, and a method of controlling the same.

### (b) Description of the Related Art

A drive video record system is, for example, a device that records video of a driving situation of a vehicle.

To this end, the drive video record system may include a controller, a memory for video storage, and a camera for video capture.

The drive video record system generally stores vehicle driving data along with video around a vehicle during driving, and records video according to an input setting when a set event is detected during parking.

The drive video record system has initially been called a black box and installed only externally, and is recently provided by being previously incorporated in a vehicle as a built-in system before the vehicle is shipped.

A built-in type is more advantageous than an external type in that the built-in type allows access to driving data of a host vehicle and connection with other controllers, and use thereof is expected to gradually increase.

Meanwhile, video or audio files stored by the drive video record system may include personal information.

The current drive video record system has a problem in that there is no security measure for these stored files.

### SUMMARY OF THE INVENTION

Accordingly, the present disclosure is directed to a method of controlling a drive video record system and the drive video record system that substantially obviate one or more problems due to limitations and disadvantages of the related art.

An object of an embodiment of the present disclosure is to provide a drive video record system capable of preventing leakage of personal information by blocking access by an unauthorized person to a file stored in the drive video record system.

Additional advantages, objects, and features of the disclosure will be set forth in part in the description which follows and in part will become apparent to those having ordinary skill in the art upon examination of the following or may be learned from practice of the disclosure. The objectives and other advantages of the disclosure may be realized and attained by the structure particularly pointed out in the written description and claims hereof as well as the appended drawings.

To achieve these objects and other advantages and in accordance with the purpose of the disclosure, as embodied and broadly described herein, there is provided a method of controlling a drive video record system, including providing a camera module configured to monitor an area around a vehicle, a first memory configured to store video transmitted from the camera module, and a controller including a second memory configured to store a computer program for controlling storage of the video and a processor configured to execute the computer program; acquiring, by the processor executing the computer program, password information of a user; acquiring, by the processor, video or audio according to a set condition; and encrypting and storing, by the processor, the video or audio based on the password information.

The password information may include at least one of a password including a letter or a number, fingerprint recognition information, or face recognition information.

The method may further comprise restricting access to a user interface of the drive video record system in a case of a valet mode.

The restricting access may include deactivating a menu of the user interface or hiding the menu.

In a case of entering and starting the vehicle through biometric authentication, the processor may allow access to a user interface of the drive video record system.

In a case of entering and starting the vehicle using a smart key, when there is an attempt to access the user interface of the drive video record system, the method may further comprise requesting input of biometric information, and determine whether to restrict or release access to the user interface according to the biometric information.

In a case of entering and starting the vehicle using a smart key, when there is an attempt to access the user interface of the drive video record system, the method may further comprise requesting input of a password, and determining whether to restrict or allow access to the user interface according to the password.

When the password coincides with a pre-registered password, the method may further comprise sending a warning to a pre-registered user terminal.

When approval is received from the user terminal, the method may further comprise allowing access to the user interface.

In another aspect of the present disclosure, a computer-readable recording medium stores a computer program for executing the method of controlling the drive video record system according to any one of the above described methods.

In another aspect of the present disclosure, a drive video record system includes a camera module configured to monitor an area around a vehicle, a first memory configured to store video transmitted from the camera module, and a controller including a second memory configured to store a computer program for controlling storage of the video and a processor configured to execute the computer program, wherein, through execution of the computer program, the processor is configured to acquire password information of a user, acquire video or audio according to a set condition, and encrypt and store the video or audio based on the password information.

The password information may include at least one of a password including a letter or a number, fingerprint recognition information, or face recognition information.

The processor may restrict access to a user interface of the drive video record system in a case of a valet mode.

The processor may be further configured to deactivate a menu of the user interface or hiding the menu to restrict the access.

In a case of entering and starting the vehicle through biometric authentication, the processor may be further configured to allow access to a user interface of the drive video record system.

In a case of entering and starting the vehicle using a smart key, when there is an attempt to access the user interface of the drive video record system, the processor may be further configured to request input of biometric information, and determine whether to restrict or allow access to the user interface according to the biometric information.

In a case of entering and starting the vehicle using a smart key, when there is an attempt to access the user interface of the drive video record system, the processor may be further configured to request input of a password, and determine whether to restrict or allow access to the user interface according to the password.

When the password coincides with a pre-registered password, the processor may be further configured to send a warning to a pre-registered user terminal.

When approval is received from the user terminal, the processor may be further configured to allow access to the user interface.

It is to be understood that both the foregoing general description and the following detailed description of the present disclosure are exemplary and explanatory and are intended to provide further explanation of the disclosure as claimed.

A vehicle may include the drive video recording system.

### BRIEF DESCRIPTION OF THE DRAWINGS

The accompanying drawings, which are included to provide a further understanding of the disclosure and are incorporated in and constitute a part of this application, illustrate embodiment(s) of the disclosure and together with the description serve to explain the principle of the disclosure. In the drawings:
FIG. 1 is a block diagram conceptually illustrating a configuration of a drive video record system according to an embodiment of the present disclosure; and
FIGS. 2 to 4 are flowcharts illustrating a control method according to an embodiment of the present disclosure.

### DETAILED DESCRIPTION OF THE INVENTION

It is understood that the term "vehicle" or "vehicular" or other similar term as used herein is inclusive of motor vehicles in general such as passenger automobiles including sports utility vehicles (SUV), buses, trucks, various commercial vehicles, watercraft including a variety of boats and ships, aircraft, and the like, and includes hybrid vehicles, electric vehicles, plug-in hybrid electric vehicles, hydrogen-powered vehicles and other alternative fuel vehicles (e.g. fuels derived from resources other than petroleum). As referred to herein, a hybrid vehicle is a vehicle that has two or more sources of power, for example both gasoline-powered and electric-powered vehicles.

The terminology used herein is for the purpose of describing particular embodiments only and is not intended to be limiting of the present disclosure. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. Throughout the specification, unless explicitly described to the contrary, the word "comprise" and variations such as "comprises" or "comprising" will be understood to imply the inclusion of stated elements but not the exclusion of any other elements. In addition, the terms "unit", "-er", "-or", and "module" described in the specification mean units for processing at least one function and operation, and can be implemented by hardware components or software components and combinations thereof.

Further, the control logic of the present disclosure may be embodied as non-transitory computer readable media on a computer readable medium containing executable program instructions executed by a processor, controller or the like. Examples of computer readable media include, but are not limited to, ROM, RAM, compact disc (CD)-ROMs, magnetic tapes, floppy disks, flash drives, smart cards and optical data storage devices. The computer readable medium can also be distributed in network coupled computer systems so that the computer readable media is stored and executed in a distributed fashion, e.g., by a telematics server or a Controller Area Network (CAN).

The present disclosure may be variously changed and have several embodiments, and specific embodiments will be illustrated in the drawings and described. However, this is not intended to limit the present disclosure to a specific embodiment, and should be understood to include all changes, equivalents, or substitutes included in the idea and technical scope of the present disclosure.

Although terms including ordinal numbers, such as "first", "second", etc., may be used herein to describe various components, the components are not limited by these terms. These terms are generally only used to distinguish one component from another, and a mutual sequential meaning therebetween is understood not through names but through the context of the corresponding description.

The term "and/or" is used to include any combination of a plurality of items. For example, "A and/or B" includes all three cases of "A," "B," and "A and B."

When a component is referred to as being "coupled" or "connected" to another component, the component may be directly coupled or connected to the other component. However, it should be understood that another component may be present therebetween.

Unless defined otherwise, all terms used herein, including technical or scientific terms, have the same meanings as commonly understood by those ordinary skilled in the art to which the present disclosure pertains. Terms such as those defined in commonly used dictionaries should be interpreted as having meanings consistent with the meanings in the context of the related art, and should not be interpreted as having ideal or excessively formal meanings unless explicitly defined in this application.

Meanwhile, a processor may include a semiconductor integrated circuit and/or an electronic device performing at least one or more of comparison, determination, calculation, or decision to achieve a programmed function. For example, the processor may be any one or a combination of a computer, a microprocessor, a CPU, an ASIC, and an electronic circuit (circuitry or logic circuits).

Further, the computer-readable recording medium (also simply referred to as a memory) includes all types of storage devices that store data readable by a computer system. For example, the recording medium may include at least one of a memory of a flash memory type, a hard disk type, a micro type, or a card type (for example, an SD card (Secure Digital Card) or an XD card (eXtreme Digital Card)), or a memory of a type of RAM (Random Access Memory), SRAM (Static RAM), ROM (Read-Only Memory), PROM (Programmable ROM), EEPROM (Electrically Erasable PROM), MRAM (Magnetic RAM), magnetic disk, or optical disc.

Such a recording medium may be electrically connected to the processor, and the processor may import and record data from the recording medium. The recording medium and the processor may be integrated or may be physically separated.

Hereinafter, embodiments of the present disclosure will be described in detail with reference to the attached drawings.

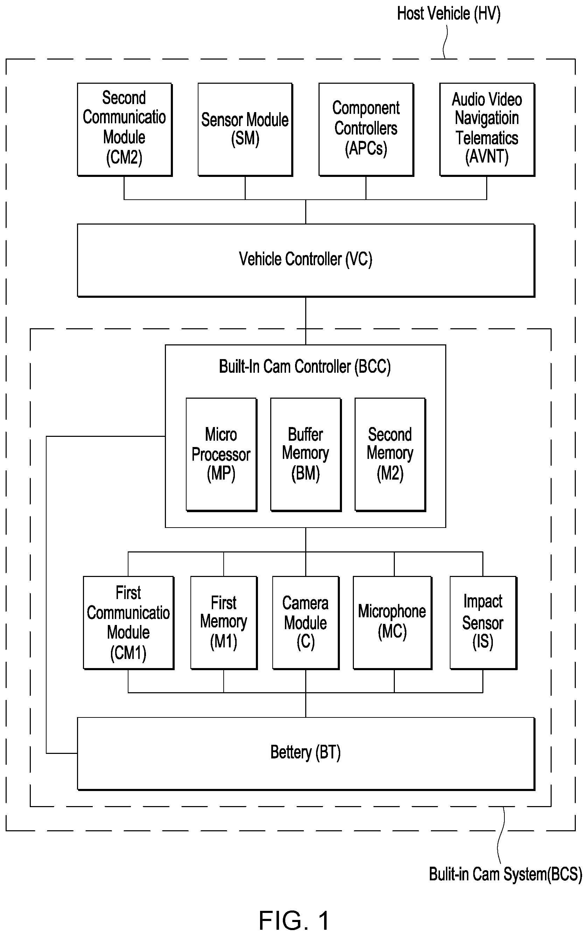

Referring to FIG. 1, a built-in drive video record system, a so-called built-in cam system BCS, according to an embodiment of the present disclosure is installed inside a host vehicle HV and includes a camera module C, a computer-readable storage medium M1, a first communication module CM1, a microphone MC, an impact sensor IS, a power auxiliary battery BT, and a built-in cam controller BCC.

The drive video record system of this embodiment is a built-in type, but is not necessarily limited thereto.

First, the camera module C includes a front camera and a rear camera in this embodiment, but is not necessarily limited thereto. The front camera is installed to photograph a front area of the vehicle HV, and the rear camera is installed to photograph a rear area of the vehicle HV.

For example, the front camera may be installed on a windshield near a rearview mirror in a vehicle HV cabin, and the rear camera may be installed on a rear window or rear bumper of the vehicle HV cabin.

The front camera and the rear camera may each support, for example, image quality of any one of HD, FHD, and Quad HD.

The image qualities of the front camera and the rear camera do not have to be the same, and it is obvious that a camera of an ADAS (Advanced Driver Assistance System) of the host vehicle HV may be used.

Further, the camera has an aperture value of f/2.0 or less, preferably f/1.6 or less. When the aperture value is lowered, more light is gathered, and thus bright recording is possible. In addition, image tuning technology is applied to minimize noise and light loss, thereby enabling clear recording even in a dark environment.

The computer-readable storage medium (hereinafter simply referred to as a "memory") M1 includes all types of storage devices storing data readable by the computer system. For example, the memory may include at least one of a memory of a flash memory type, a hard disk type, a micro type, or a card type (for example, an SD card or an xD card), or a memory of a type of RAM, SRAM, ROM, PROM, EEPROM, MRAM, magnetic disk, or optical disc.

In this embodiment, the memory M1 is a Micro SD of 64 gigabytes or more and is external. For example, continuous recording during driving is possible for several hours, and continuous recording during parking is possible for up to tens of hours. Further, event recording based on impact detection is possible up to dozens of times.

A user may easily check content stored in the memory on a desktop computer by removing the SD card.

State information of the SD card may be checked through a connected car service, and it is possible to check replacement timing depending on the memory state.

The first communication module CM1 is for wired or wireless communication with the outside and is not limited as to a communication protocol thereof.

In this embodiment, the first communication module CM1 is provided with a communication device capable of communicating with peripheral devices, and illustratively supports Wi-Fi. A Wi-Fi module of this embodiment may include an AP (Access Point) function, and the user may easily and rapidly access the built-in cam through, for example, a smartphone.

The microphone MC supports audio recording. When driving video of the vehicle HV is recorded, not only video but also audio may be recorded.

The impact sensor IS senses external impact and may be, for example, a 1-axis or 3-axis acceleration sensor.

The impact sensor IS may be exclusively provided in the built-in cam system BCS, but it is obvious that the acceleration sensor installed in the host vehicle HV may be used.

A signal from the impact sensor IS may be a basis for starting event recording, which will be described later, and the magnitude of the impact serving as the basis may be set by the user.

For example, the user may select impact detection sensitivity serving as a basis for event recording when performing setting for the built-in cam system BCS through a display screen in the vehicle HV (for example, an AVNT (Audio Video Navigation Telematics) screen, which will be described later).

For example, impact detection sensitivity may be divided into five levels of level 1 (significantly insensitive), level 2 (insensitive), level 3 (moderate), level 4 (sensitive), and level 5 (significantly sensitive).

The built-in cam system BCS may receive power from a battery (for example, a 12 V-battery) installed in the vehicle HV.

Even though the system may be operated by receiving power from the battery of the vehicle HV not only during driving but also during parking, since there may be a problem of overconsumption of the battery of the vehicle HV, this embodiment includes the power auxiliary battery BT.

In this embodiment, the built-in cam system BCS receives power from one of the battery of the vehicle HV during driving, an alternator in the case of an internal combustion engine vehicle, and a lower DC/DC converter (LDC) in the case of an electric vehicle, and receives power from the power auxiliary battery BT during parking.

The power auxiliary battery BT may be charged/discharged according to an operating environment of the vehicle HV and supplies optimal power for recording and wireless software update (OTA software update) during parking.

The power auxiliary battery BT may be charged by the battery of the vehicle HV (low-voltage battery or high-voltage battery of an electric vehicle) or by an alternator in the case of an internal combustion engine vehicle HV.

The built-in cam controller BCC is a higher-level controller that controls other components of the built-in cam system BCS, and exchanges signals with a controller VC of the host vehicle HV and/or a second communication module CM2 (vehicle communication module), a sensor module SM, component controllers APCs, AVNT, etc.

Here, the sensor module SM may include one or more of a speed sensor, an acceleration sensor, a vehicle position sensor (for example, GPS receiver), a steering angle sensor, a yaw rate sensor, a pitch sensor, and a roll sensor, and the component controllers APCs may include one or more of a directional signal controller, a turn signal controller, a wiper controller, an ADAS system controller, and an airbag controller.

The built-in cam controller BCC controls other components to perform continuous recording during driving, continuous recording during parking, and event recording according to an impact detection signal.

During recording, driving information of the vehicle HV may also be recorded.

Here, the driving information of the vehicle HV may include a time, a vehicle speed, a gear position, directional signal information, a degree of impact detection (one of the five levels mentioned above), global positioning system (GPS) location information, etc.

The vehicle driving information may be transmitted from the vehicle controller VC, and the vehicle driving information may naturally be directly received from the corresponding module or component of the vehicle HV. For example, the vehicle speed may be directly received from the speed sensor of the vehicle HV, directional signal information (or turn signal information from the turn signal controller) may be directly received from the directional signal controller, and the GPS location information may be received from the AVNT or the GPS receiver.

As described above, event recording is performed when event occurrence is detected during parking according to impact detection sensitivity set by the user.

During event recording, recording proceeds from a set time before event occurrence to a set time thereafter, and the set time may be selected by the user.

The AVNT is connected to the built-in cam controller BCC through the vehicle controller VC or directly, and the AVNT screen may function as a user interface for receiving selection of various setting parameters of the built-in cam system BCS from the user.

The built-in cam controller BCC may transmit recorded content to an external server according to a set cycle, according to user selection, or according to occurrence of a user-set event (for example, impact detection level).

The built-in cam controller BCC may include a memory M2 and a processor MP to perform the function.

For example, the processor MP may include a semiconductor integrated circuit and/or electronic devices performing at least one or more of comparison, determination, calculation, or decision to achieve a programmed function. For example, the processor MP may be any one or a combination of a computer, a microprocessor, a CPU, an ASIC, and an electronic circuit (circuitry or logic circuits).

The memory M2 includes all types of storage devices storing data readable by the computer system. For example, the memory may include at least one of a memory of a flash memory type, a hard disk type, a micro type, or a card type (for example, an SD card or an xD card), or a memory of a type of RAM, SRAM, ROM, PROM, EEPROM, MRAM, magnetic disk, or optical disc.

Operating software of the built-in cam controller BCC may be stored in the memory M2, and the processor MP performs a function of the built-in cam controller BCC by reading and executing the software.

Further, the built-in cam controller BCC may include a buffer memory BM for determination and calculation in the processor MP.

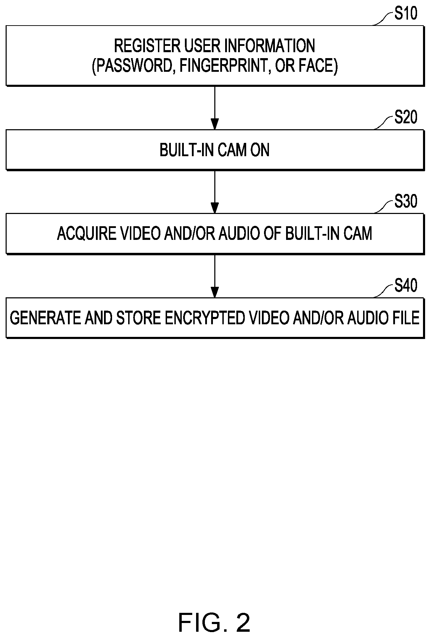

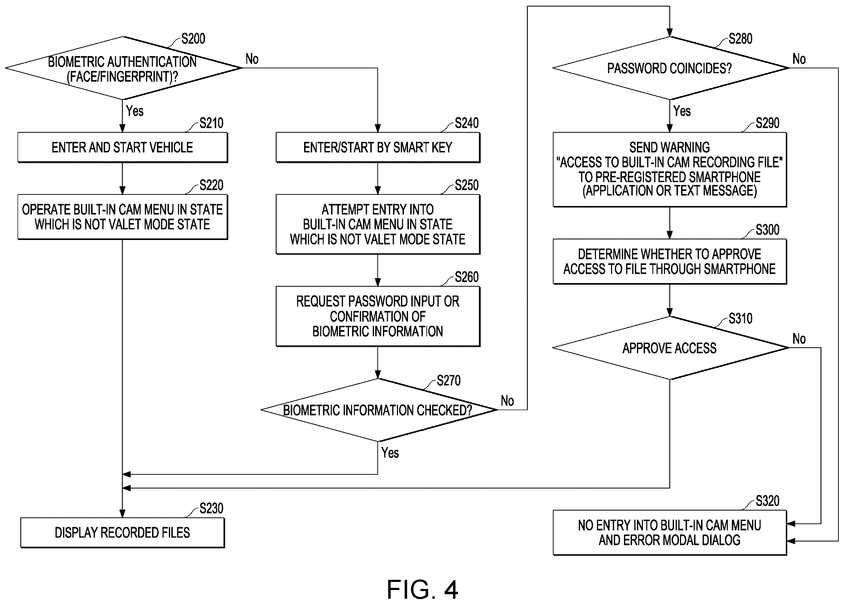

Hereinafter, a control method according to an embodiment of the present disclosure will be described in detail with reference to FIGS. 2 to 4.

First, in FIG. 2, step S 10 is a step in which user information is registered.

To this end, a device for registering user information may be prepared in the vehicle HV. For example, the user (driver) may register a password using the AVNT screen as a user interface.

Alternatively, a device (not shown) for fingerprint or face recognition may be prepared in the vehicle HV, and the user may register a fingerprint or a face of the user using the device.

Registered user information may be used to authenticate the user.

An authenticated user may access various settings of a vehicle system.

Further, for example, the registered fingerprint or face may be used for user authentication for starting the vehicle HV.

Further, user information may be individually registered by a plurality of users.

Step S20 means that the built-in cam BCS is in an on state.

For example, the built-in cam controller BCC may manage the built-in cam BCS in an on state, a sleep state, an off state, etc. depending on the power usage state.

The on state is an active state in which power is supplied to the entire built-in cam BCS, and continuous recording or event recording is possible. The sleep state is a state in which minimal power use is maintained to reduce power consumption, and is similar to a sleep state of a typical electrical device. The off state may be defined as a state in which power use is blocked.

Video recording cannot be performed in the sleep state, and the sleep state may be switched to the on state as a set condition is satisfied.

The built-in cam controller BCC acquires video and/or audio by controlling the camera module C according to a condition set in step S30, that is, according to a set continuous recording condition or event recording condition.

Then, in step S40, the acquired video and/or audio is encrypted and stored using the above-described user information.

Security of an encrypted file cannot be disabled unless the user information is confirmed to match, and thus access by an unauthorized person is restricted.

Here, when there is a plurality of pieces of registered user information, a different password may be applied to each user. That is, a file of a user A may be encrypted and stored using a password A, and a file of a user B may be encrypted and stored using a password B. Here, the password A may be a registration password, a fingerprint, a face, etc. of the user A, and the password B may be a registration password, a fingerprint, a face, etc. of the user B.

The built-in cam controller BCC may request input of registration information through the user interface on the AVNT screen when starting the vehicle HV to identify the user.

Then, the built-in cam controller BCC identifies the user among a plurality of users based on the input user information and encrypts the file according to the registration information of the user.

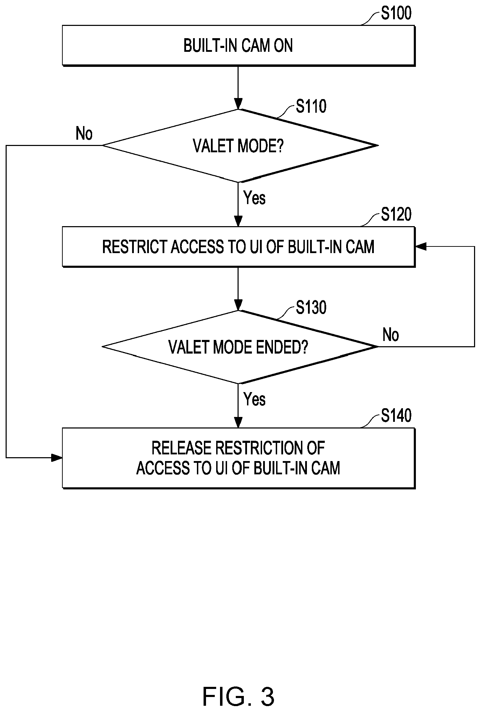

FIG. 3 is a flowchart illustrating another control method according to an embodiment of the present disclosure.

First, step S 100 indicates that the built-in cam is in an on state.

In step S 110, the built-in cam controller determines whether the vehicle HV is in a valet mode.

To this end, the built-in cam controller may receive information about a current mode of the vehicle HV from the vehicle HV controller.

For example, the built-in cam controller may request information about the current mode from the vehicle HV controller and receive information indicating whether the vehicle is in the valet mode in response.

The valet mode is a vehicle HV mode for the case of entrusting the vehicle HV to someone else during valet parking or when the driver is unable to drive. When the valet mode is selected, the vehicle HV controller switches various systems to predetermined settings.

In step S110, upon determining that the vehicle is in the valet mode, the built-in cam controller BCC restricts access to the user interface of the built-in cam BCS in step S120.

Here, for example, restriction of access to the user interface of the built-in cam BCS may include deactivating a built-in cam BCS menu or hiding the built-in cam BCS menu from the screen.

Further, upon determining that the valet mode has ended in step S130 (Yes in S130), the access restriction is released in step S140. Upon determining in step S130 that a state of the valet mode continues (No in S130), the access restriction is maintained (step S120).

FIG. 3 is a flowchart illustrating still another control method according to an embodiment of the present disclosure, which will be described in detail below.

Step S200 is a procedure for receiving biometric information from a biometric device installed in the vehicle HV and authenticating the user accordingly.

For example, the vehicle HV controller performs user authentication by comparing information recognized by a fingerprint or facial recognition device with previously stored information.

Further, step S210 represents the case where a legitimate user authenticated as such enters and starts the vehicle HV.

When the authenticated user operates the built-in cam BCS menu in step S220 and accesses a folder where recorded driving video files are stored, the corresponding files are output to the screen in step S230. In other words, file access is allowed to legitimate users authenticated in step S230.

In this instance, in the case of the valet mode, steps S120, S130, and S140 of FIG. 3 described above may be performed.

Meanwhile, step S240 represents the case where the vehicle HV is entered and started using a smart key rather than a biometric authentication method.

In this case, when a passenger operates the built-in cam BCS menu in step S250, the built-in cam controller BCC may request password input or confirmation of biometric information in step S260.

To this end, a password input window may be displayed on a user interface screen (for example, the AVNT screen), or the recognition device may be activated to receive biometric information, and the information may be received as the biometric information is recognized through the device.

Here, in the case of the valet mode, steps S120, S130, and S140 of FIG. 3 described above may be performed.

In step S270, the biometric information input in step S260 is compared with previously stored information to confirm that the user is a legitimate user.

Upon determining that the user is a legitimate user in step S270, the process proceeds to step S230.

On the other hand, upon determining that the user is not a legitimate user in step S270, the input password is matched with a previously stored number in step S280 to verify whether the password coincides with the number.

Upon determining that the password coincides with the number in step S280, a warning is sent to a pre-registered user terminal (for example, smartphone) in step S290.

For example, the built-in cam controller BCC may send a text message to the user terminal to warn that the stored file of the built-in cam BCS is being accessed.

In step S300, when the user receives such a warning, the user may transmit information indicating whether access to the file is approved to the built-in cam controller.

Upon receiving a determination as to whether to approve the user, that is, whether to grant permission, in step S300, the built-in controller proceeds to step S320 when permission has not been granted according to the determination in step S310, and proceeds to step S230 when permission has been granted.

In step S320, the built-in controller may deactivate the built-in cam BCS menu or display an error message on the screen as a modal dialog.

It is obvious that two or more of the control methods of FIGS. 2 to 4 described above may be integrated and implemented in the same built-in cam system BCS.

The drive video record system according to an embodiment of the present disclosure may prevent leakage of personal information by blocking access by an unauthorized person to a stored file.

It will be apparent to those skilled in the art that various modifications and variations can be made in the present disclosure without departing from the spirit or scope of the disclosure. Thus, it is intended that the present disclosure cover the modifications and variations of this disclosure provided they come within the scope of the appended claims and their equivalents.

## Claims

1. A method of controlling a drive video record system, the method comprising:
providing a camera module configured to monitor an area around a vehicle, a first memory configured to store video transmitted from the camera module, and a controller including a second memory configured to store a computer program for controlling storage of the video and a processor configured to execute the computer program, the method comprising:
acquiring, by the processor executing the computer program, password information of a user;
acquiring, by the processor, video or audio according to a set condition; and
encrypting and storing, by the processor, the video or audio based on the password information.

2. The method according to claim 1, wherein the password information comprises at least one of a password including a letter or a number, fingerprint recognition information, or face recognition information.

3. The method according to claim 1 or 2, further comprising restricting, by the processor, access to a user interface of the drive video record system in a case of a valet mode, wherein, optionally, restricting the access comprises deactivating a menu of the user interface or hiding the menu.

4. The method according to anyone of claims 1-3, further comprising allowing access to a user interface of the drive video record system in a case of entering and starting the vehicle through biometric authentication.

5. The method according to anyone of claims 1-4, further comprising, in a case of entering and starting the vehicle using a smart key, requesting input of biometric information and determine whether to restrict or allow access to the user interface according to the biometric information when there is an attempt to access the user interface of the drive video record system.

6. The method according to according to anyone of claims 1-5, further comprising, in a case of entering and starting the vehicle using a smart key, requesting input of a password and determine whether to restrict or allow access to the user interface according to the password when there is an attempt to access the user interface of the drive video record system, wherein, optionally, the method further comprises, when the password coincides with a pre-registered password, sending a warning to a pre-registered user terminal.

7. The method according to claim 6, further comprising, when approval is received from the user terminal, allowing access to the user interface.

8. A non-transitory computer-readable recording medium storing a computer program for executing the method of controlling the drive video record system according to anyone of claims 1-7.

9. A drive video record system comprising:
a camera module configured to monitor an area around a vehicle;
a first memory configured to store video transmitted from the camera module; and
a controller including a second memory configured to store a computer program for controlling storage of the video and a processor configured to execute the computer program, wherein, through execution of the computer program, the processor is configured to:
acquire password information of a user;
acquire video or audio according to a set condition; and
encrypt and store the video or audio based on the password information.

10. The drive video record system according to claim 9, wherein the password information comprises at least one of a password including a letter or a number, fingerprint recognition information, or face recognition information.

11. The drive video record system according to claim 9 or 10, wherein the processor is further configured to restrict access to a user interface of the drive video record system in a case of a valet mode, wherein, optionally, the processor is further configured to deactivate a menu of the user interface or hiding the menu to restrict the access.

12. The drive video record system according to anyone of claims 9-11, wherein, in a case of entering and starting the vehicle through biometric authentication, the processor is further configured to allow access to a user interface of the drive video record system.

13. The drive video record system according to anyone of claims 9-12, wherein, in a case of entering and starting the vehicle using a smart key, the processor is further configured to request input of biometric information, and determine whether to restrict or allow access to the user interface according to the biometric information when there is an attempt to access the user interface of the drive video record system.

14. The drive video record system according to anyone of claims 9-13, wherein, in a case of entering and starting the vehicle using a smart key, the processor is further configured to request input of a password, and determine whether to restrict or allow access to the user interface according to the password when there is an attempt to access the user interface of the drive video record system, wherein, optionally, when the password coincides with a pre-registered password, the processor is further configured to send a warning to a pre-registered user terminal.

15. The drive video record system according to claim 14, wherein, when approval is received from the user terminal, the processor is further configured to allow access to the user interface.

16. A vehicle comprising the drive video recording system of anyone of claims 9-15.

## Amended claims

### Amended claims in accordance with Rule 137(2) EPC.

1. A method of controlling a drive video record system, the method comprising:
providing a camera module (C) configured to monitor an area around a vehicle (HV), a first memory (M1) configured to store video transmitted from the camera module (C), and a controller (BCC) including a second memory (M2) configured to store a computer program for controlling storage of the video and a processor (MP) configured to execute the computer program, the method comprising:
acquiring, by the processor (MP) executing the computer program, password information of a user;
acquiring, by the processor (MP), video or audio according to a set condition; and
encrypting and storing, by the processor (MP), the video or audio based on the password information,
**characterized by** further comprising, in a case of entering and starting the vehicle (HV) using a smart key, requesting input of a password and determine whether to restrict or allow access to the user interface according to the password when there is an attempt to access the user interface of the drive video record system,
further comprising, when the password coincides with a pre-registered password, sending a warning to a pre-registered user terminal, and
further comprising, when approval is received from the user terminal, allowing access to the user interface.

2. The method according to claim 1, wherein the password information comprises at least one of a password including a letter or a number, fingerprint recognition information, or face recognition information.

3. The method according to claim 1 or 2, further comprising restricting, by the processor (MP), access to a user interface of the drive video record system in a case of a valet mode.

4. The method according to claim 3, wherein restricting the access comprises deactivating a menu of the user interface or hiding the menu.

5. The method according to anyone of claims 1-4, further comprising allowing access to a user interface of the drive video record system in a case of entering and starting the vehicle (HV) through biometric authentication.

6. The method according to anyone of claims 1-5, further comprising, in a case of entering and starting the vehicle (HV) using a smart key, requesting input of biometric information and determine whether to restrict or allow access to the user interface according to the biometric information when there is an attempt to access the user interface of the drive video record system.

7. A drive video record system comprising:
a camera module (C) configured to monitor an area around a vehicle (HV);
a first memory (M1) configured to store video transmitted from the camera module (C); and
a controller (BCC) including a second memory (M2) configured to store a computer program for controlling storage of the video and a processor (MP) configured to execute the computer program,
wherein, through execution of the computer program, the processor (MP) is configured to:
acquire password information of a user;
acquire video or audio according to a set condition; and
encrypt and store the video or audio based on the password information,
**characterized in that**:
wherein, in a case of entering and starting the vehicle (HV) using a smart key, the processor (MP) is further configured to request input of a password, and determine whether to restrict or allow access to the user interface according to the password when there is an attempt to access the user interface of the drive video record system,
wherein, when the password coincides with a pre-registered password, the processor (MP) is further configured to send a warning to a pre-registered user terminal, and
wherein, when approval is received from the user terminal, the processor (MP) is further configured to allow access to the user interface.

8. The drive video record system according to claim 7, wherein the password information comprises at least one of a password including a letter or a number, fingerprint recognition information, or face recognition information.

9. The drive video record system according to claim 7 or 8, wherein the processor (MP) is further configured to restrict access to a user interface of the drive video record system in a case of a valet mode.

10. The drive video record system according to claim 9, wherein the processor (MP) is further configured to deactivate a menu of the user interface or hiding the menu to restrict the access.

11. The drive video record system according to anyone of claims 7-10, wherein, in a case of entering and starting the vehicle (HV) through biometric authentication, the processor (MP) is further configured to allow access to a user interface of the drive video record system.

12. The drive video record system according to anyone of claims 7-11, wherein, in a case of entering and starting the vehicle (HV) using a smart key, the processor (MP) is further configured to request input of biometric information, and determine whether to restrict or allow access to the user interface according to the biometric information when there is an attempt to access the user interface of the drive video record system.

13. A vehicle (HV) comprising the drive video recording system of anyone of claims 7-12.
